# FASCICULE DE BREVET EUROPEEN

(11) **EP 2 926 232 B1**
(45) Date de publication et mention de la délivrance du brevet: **15.01.2020**
(21) Numéro de dépôt: 13801493.1
(22) Date de dépôt: 22.11.2013
(51) Int. Cl.: G06F 3/048, G06F 3/041, G06Q 10/10, G06F 3/0488, G06F 3/044, G06F 3/043, G06F 3/0354

(54) **SYSTÈME ET PROCÉDÉ DE COMMUNICATION REPRODUISANT UNE INTERACTIVITÉ DE TYPE PHYSIQUE**
SYSTEM UND VERFAHREN ZUR KOMMUNIKATIONSWIEDERGABE EINER PHYSISCHEN INTERAKTIVITÄT
SYSTEM AND METHOD FOR COMMUNICATION REPRODUCING AN INTERACTIVITY OF PHYSICAL TYPE

(30) Priorité: 29.11.2012 FR 1261406; 07.12.2012 FR 1261750
(43) Date de publication de la demande: 07.10.2015
(73) Titulaire: Renault S.A.S., 92100 Boulogne-Billancourt (FR)
(72) Inventeur: GILBERT, Nicolas, F-92160 Antony (FR); DENOUAL, Hervé, F-78370 Plaisir (FR)
(86) Numéro de dépôt international: PCT/EP2013/074470
(87) Numéro de publication internationale: WO 2014/082928

(56) Documents cités:
- EP-A2- 2 228 711
- US-A- 5 402 151
- US-A1- 2008 284 925
- US-A1- 2009 278 794
- US-A1- 2010 318 470
- US-A1- 2011 163 964
- US-A1- 2011 169 756
- US-B1- 6 611 258
- RAJA GUMIENNY ET AL: "Tele-Board: Enabling efficient collaboration in digital design spaces", COMPUTER SUPPORTED COOPERATIVE WORK IN DESIGN (CSCWD), 2011 15TH INTERNATIONAL CONFERENCE ON, IEEE, 8 juin 2011 (2011-06-08), pages 47-54, XP031902295, DOI: 10.1109/CSCWD.2011.5960054 ISBN: 978-1-4577-0386-7
- HPITeleBoard: "Tele-Board | Connecting Ideas", , 22 mars 2012 (2012-03-22), page 1, XP054975315, Extrait de l'Internet: URL:https://www.youtube.com/watch?v=CkTXLw XSezE [extrait le 2014-02-12]
- PETER BRANDL ET AL: "An Adaptable Rear-Projection Screen Using Digital Pens And Hand Gestures", ARTIFICIAL REALITY AND TELEXISTENCE, 17TH INTERNATIONAL CONFERENCE ON, IEEE, PI, 1 novembre 2007 (2007-11-01), pages 49-54, XP031199340, ISBN: 978-0-7695-3056-7
- Anonymous: "paperboard - Wiktionnaire", , 12 May 2015 (2015-05-12), XP055508132, Retrieved from the Internet: URL:https://fr.wiktionary.org/w/index.php? title=paperboard&oldid=19877752 [retrieved on 2018-09-19]

## Description

L'invention concerne un système et un procédé de communication reproduisant une interactivité de type physique entre deux ou plus de deux participants au moyen d'au moins un écran d'affichage qui comporte un dispositif agencé pour détecter des positions de doigts humains en contact avec l'écran, notamment en mesurant une grandeur physique qui varie en fonction d'un contact du doigt humain sur l'écran.

### Domaine technique

Les écrans tactiles sont déjà connus sur des appareils de petite taille comme des téléphones mobiles ou des tablettes tactiles communicantes qui offrent une interactivité essentiellement virtuelle à plusieurs acteurs qui communiquent entre eux en manipulant des fonctionnalités de leurs appareils respectifs, dédiés chacun à un utilisateur.

Un besoin se fait ressentir pour reproduire une interactivité de type physique entre les acteurs qui sont des participants à une réunion, par exemple l'interactivité apportée par le partage sur un support physique commun, par la possibilité de se libérer d'une focalisation sur un petit appareil et de s'observer en grandeur nature. Ce type d'interactivité existe déjà depuis longtemps dans les salles de classe ou de réunions en s'appuyant sur un grand tableau, sur des planches à papier (paperboard en anglais) de grand format sur lesquels on peut écrire à tour de rôle en échangeant une craie ou un crayon ou sur lesquels on peut encore coller des documents de différentes natures en vrai grandeur.

### Technique antérieure

L'état de la technique propose différentes mises en œuvre de technologies modernes, notamment dans le domaine de l'électronique et de l'informatique pour décupler cette interactivité en lui conservant son aspect physique, mais sans apporter entière satisfaction.

Le document WO99/29100 par exemple divulgue un procédé pour restituer et stocker de l'information qui comprend des étapes consistant à fournir une feuille dont une première face reçoit l'information et une face opposée supporte un adhésif repositionnable, fournir un numériseur avec moyens de numérisation et chariot mobile, fournir des moyens de restitution et/ou de stockage de l'information numérisée, fournir l'information sur la première face de la feuille, attacher la feuille par l'adhésif repositionnable sur le chariot mobile, numériser la première face de la feuille en déplaçant le chariot mobile avec la feuille sous les moyens de numérisation de façon à obtenir l'information contenue sur la première face de la feuille, et mémoriser ou restituer la forme digitale d'information.

Cependant les solutions connues de cet état antérieur de la technique présentent de nombreux inconvénients. Une exécution de tâches manuelles par les participants pour arracher une feuille de papier et la numériser puis ranger la feuille de papier parfois encombrante, peut nuire à la concentration des participants et les détourner de leur but essentiel dans une réunion qui est plus celui de confronter des idées et des connaissances que de manipuler des commandes d'appareils informatiques. Un autre inconvénient d'une mémorisation de document dans un état figé est celui de perdre toute la dynamique qui a mené à son état final.

Le document US5402151 divulgue un système de traitement de données avec un écran tactile et une tablette de numérisation, l'ensemble étant intégré dans un dispositif de capture numérique. La tablette de numérisation procure une fonction de dessin ou d'écriture au moyen d'un stylet alors qu'un touché de l'écran tactile permet de sélectionner des données à traiter. Malheureusement, le système divulgué ne reproduit pas l'effet technique d'une feuille de papier réelle non seulement sur laquelle on peut écrire au moyen d'un objet de type stylet ou autre, mais aussi d'une feuille de papier que l'on peut faire varier, en d'autres termes déplacer ou réduire, au moyen des doigts de la main.

Le document EP2228711 divulgue un terminal mobile et un procédé pour procurer une interface utilisateur. Un objet de type stylo permet de naviguer sur la Toile ou de toucher des boutons virtuel, dans ce dernier cas sans distinction avec un doigt d'utilisateur. L'appréhension d'une feuille de papier réelle n'est pas reproduite.

Le document US2010/03184470 divulgue des moyens de traitement de l'information dans lequel on peut mouvoir des notes manuscrites sur un écran en tirant dessus avec un doigt ou un crayon numérique. Le crayon numérique est utilisable aussi pour écrire sur l'écran. La possibilité offerte de déplacer une note manuscrite aussi bien avec un crayon qu'avec un doigt n'apparaît pas pleinement satisfaisante pour reproduire une interactivité de type physique dans laquelle la fonction de déplacement est plus naturellement réservée à la main, celle de l'écriture restant dédiée au crayon.

Le document ISBN 978-1-4577-0386-7 divulgue un système d'augmentation d'efficacité collaborative dans des espaces numériques de conception. Ce document n'apporte pas de solution satisfaisante au problème de savoir comment distinguer la fonction d'écriture d'autres fonctions pouvant être effectuée par un crayon, notamment celle du déplacement d'un objet sur un écran.

Le document répertorié XP054975315 à l'Office Européen des Brevets est une vidéo visualisée par ledit Office le 12 février 2014 sur le site Internet https://www.youtube.com/watch?v=CkTXLwXSezE. Ce document montre un bandeau en partie supérieure de l'écran dans lequel l'utilisateur vient choisir la fonction qu'il souhaite attribuer au glissement sur l'écran, indifféremment d'un doigt ou d'un objet. Le procédé exposé impose à l'utilisateur de passer par le bandeau chaque fois qu'il veut passer d'une fonction d'écriture à une fonction de déplacement, sans jamais pouvoir faire les deux simultanément.

De nombreux problèmes se posent pour capter et structurer l'information pertinente au cours d'une réunion d'autant plus mouvementée qu'elle est vivante.

### Résumé de l'invention

L'invention a pour objectif de répondre aux problèmes posés par l'état antérieur de la technique, notamment en termes d'efficacité tout en évitant des augmentations de coût et de risque de panne regrettables.

Pour atteindre cet objectif, l'invention a pour objet un système de communication et un procédé de communication selon l'une des revendications indépendantes . Des mises en œuvres particulières de l'invention font l'objet des revendications dépendantes.

L'invention a aussi pour objet un programme d'ordinateur comprenant des instructions de code de programme pour l'exécution des étapes du procédé selon l'invention lorsque le programme est exécuté sur un ou plusieurs ordinateurs.

### Description sommaire des dessins

D'autres caractéristiques et avantages apparaîtront à la lecture de la description qui suit, en référence aux dessins annexés dans lesquels :
- la figure 1 montre un système de communication conforme à l'invention,
- la figure 2 est une vue en perspective éclatée d'un premier mode de réalisation de planche à papiers électronique conforme à l'invention,
- les figures 3 et 4 sont des schémas explicatifs du fonctionnement du mode de réalisation illustré par la figure 2,
- la figure 5 montre une intégration possible du mode de réalisation illustré par la figure 2,
- la figure 6 est une vue en perspective d'un deuxième mode de réalisation de planche à papiers électronique conforme à l'invention,
- la figure 7 est une vue en perspective éclatée d'un premier mode de réalisation de tableau panoramique électronique conforme à l'invention,
- les figures 8 et 9 sont des schémas explicatifs du fonctionnement du mode de réalisation illustré par la figure 7,
- la figure 10 est une vue en perspective éclatée d'un premier mode de réalisation de table horizontale électronique conforme à l'invention,
- la figure 11 montre des étapes de procédé conforme à l'invention.

### Manières de réaliser l'invention

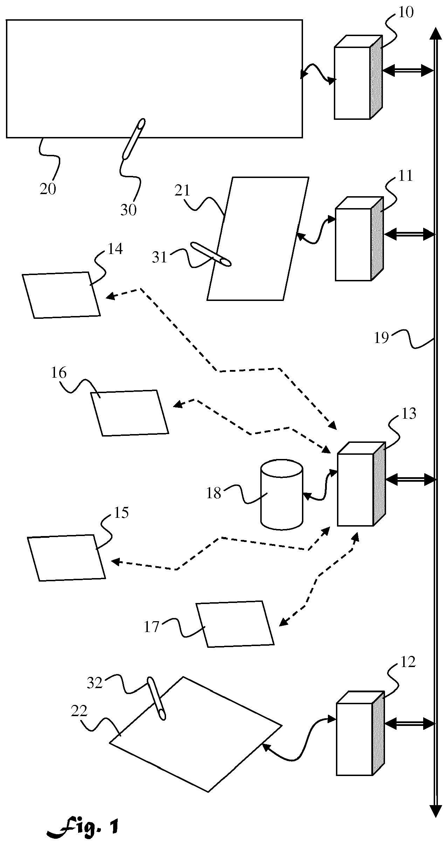

Le système de communication représenté sur la figure 1 comprend un écran d'affichage 21 qui matérialise une planche à papiers (paperboard en anglais) virtuelle.

L'écran d'affichage 21 comprend deux dispositifs agencés pour reproduire les fonctionnalités d'une planche à papiers physique classique offertes généralement à un utilisateur.

On rappelle qu'une planche à papiers physique comprend habituellement une pile stratifiée de feuilles de papier superposées avec chacune une face présentée sensiblement verticalement. Les feuilles sont reliées entre elles par une arête supérieure de façon à pouvoir être délitées successivement aisément au cours d'une séance de présentation par arrachement ou par retournement de la feuille visible vers l'arrière de la planche. La planche à papiers permet ainsi à un utilisateur de disposer d'une nouvelle feuille vierge sur laquelle il peut s'exprimer.

Le ou les utilisateurs préfèrent généralement retourner les feuilles vers l'arrière de façon à pouvoir remémorer une étape précédente en cours de séance si besoin est en retournant une ou plusieurs feuilles vers l'avant.

Par rapport au tableau blanc qu'il est nécessaire d'effacer pour continuer à écrire lorsqu'il est surchargé ou de manière à aborder un sujet suivant, la planche à papiers présente un avantage qui est celui de pouvoir garder une trace de la séance en récupérant les feuilles après la clôture.

Par rapport à un écran sur lequel on affiche une présentation préparée à l'avance, éventuellement modifiable par un animateur de séance depuis son ordinateur, la planche à papiers et le tableau blanc présentent un autre avantage qui est celui de dynamiser la séance en faisant participer le corps entier de l'utilisateur généralement debout et qui écrit par des mouvements amples du bras sur une surface généralement suffisamment étendue pour être visible par un groupe de participants. L'intervention possible d'autres participants sur la planche à papiers ou le tableau blanc dynamise encore davantage la séance. En d'autres termes, les objets physiques qui viennent d'être évoqués, permettent de combiner les actions corporelles aux actions cérébrales et ainsi d'enrichir la puissance de réflexion et d'échange des participants.

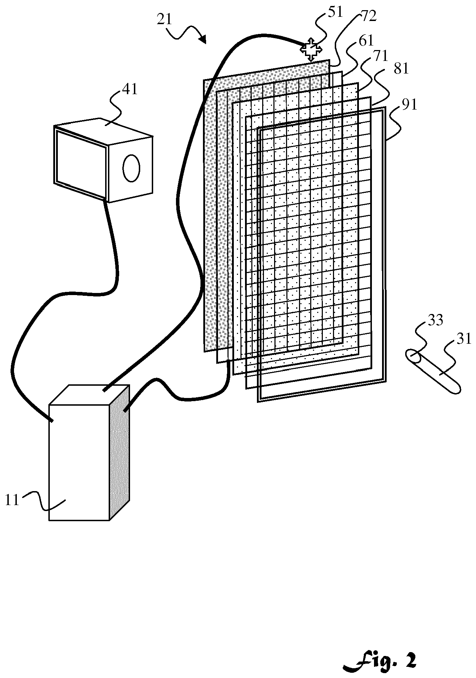

De façon à reproduire les fonctionnalités avantageuses ci-dessus exposées, l'écran d'affichage 21 a des dimensions comparables à celles d'une planche à papiers classique et comporte les deux dispositifs à présent expliqués en référence à la figure 2.

Le premier dispositif est agencé pour détecter au moins une position de doigt humain en mesurant une première grandeur physique qui varie en fonction d'un contact de doigt humain sur l'écran 21.

De manière à matérialiser un tableau blanc ou une planche à papiers au moyen de l'écran 21, le premier dispositif lié au tableau blanc ou à la planche à papier, est de préférence de type capacitif. Par exemple, le premier dispositif comprend un capteur tactile capacitif de type PCT (acronyme de l'expression anglaise Projected Capacitive Touch), particulièrement adapté aux surfaces de taille comparable à celle d'une planche à papiers ou d'un petit tableau blanc, généralement comprise entre un et deux mètres de diagonale.

L'écran 21 comprend un film constitué typiquement de quatre couches transparentes. La couche 61 contient un réseau de conducteurs électriques orientés selon une première direction, par exemple verticale. La couche 81 contient un réseau de conducteurs électriques orientés selon une deuxième direction, par exemple horizontale. La couche 71, électriquement isolante, est disposée entre les couches 61 et 81. La couche 91, elle aussi électriquement isolante, est disposée sur la face avant de l'écran 21 de façon à créer un espace diélectrique entre les conducteurs de l'écran et les matières vivantes ou inertes en contact avec la face avant de l'écran.

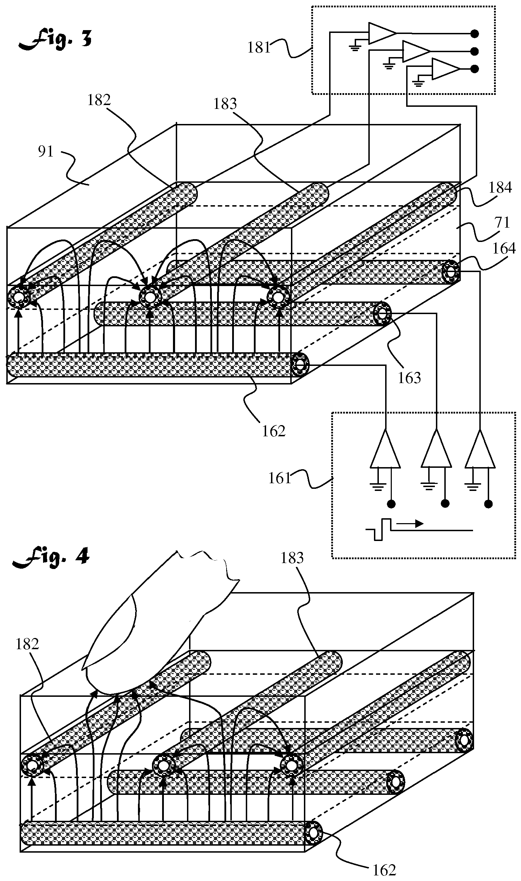

Le fonctionnement tactile de l'écran 21 est expliqué maintenant en référence aux figures 3 et 4.

Les conducteurs électriques 182, 183, 184 de la couche 81 et les conducteurs électriques 162, 163, 164 de la couche 61, sont représentés en nombre nettement inférieur à la réalité qui est de l'ordre de plusieurs centaines, ceci de façon à en faciliter les explications. De même l'échelle de représentation des conducteurs électriques 182 à 184 et 162 à 164, est volontairement amplifiée. Les conducteurs électriques sont de préférence réalisés au moyen de nanotubes largement espacés les uns des autres dans une matrice transparente et électriquement isolante, de façon à maintenir la transparence des couches 81 et 61. Ils sont par exemple réalisés au moyen de fullerènes.

Un circuit électronique 161 génère une tension de charge suivie d'une tension de décharge par rapport à la masse, appliquée successivement à chacun des conducteurs de la couche 61. La tension électrostatique résultante qui apparaît alors sur chacun des conducteurs de la couche 81, est mesurée par un circuit électronique 181 qui transmet le résultat de la mesure à un ordinateur 11.

La figure 3 illustre un état de l'écran 21 à l'instant où la tension de charge est appliquée sur le conducteur 162 en absence de matière reliée à la masse et établissant un contact avec la face supérieure de la couche 91. Des lignes de champ électriques partant du conducteur 162, se répartissent de manière régulière dans la couche 71 pour converger sur chacun des conducteurs 182, 183, 184 en suivant un profil de base reproductible dans des conditions identiques au cours du temps.

La figure 4 illustre un état de l'écran 21 aussi à l'instant où la tension de charge est appliquée sur le conducteur 162 mais ici en présence de matière reliée à la masse et établissant un contact avec la face supérieure de la couche 91. C'est le cas par exemple d'un doigt qui surplombe le conducteur 162 à proximité des conducteurs 182 et 183. Les lignes de champ électriques partant du conducteur 162, se répartissent alors de manière irrégulière dans la couche 71 pour converger partiellement sur chacun des conducteurs 182, 183 et partiellement sur le doigt en contact avec la couche isolante 91. Les lignes de champ électrique convergeant vers des conducteurs de la couche 81 plus éloignés, ne sont pas perturbées par le contact du doigt et continuent à suivre le profil de base. La perturbation provoquée par le déficit de charge résultant sur un ou plusieurs conducteurs 182, 183, modifie la mesure relative à ces conducteurs dans le circuit électronique 181.

Un premier module logiciel de localisation dans l'ordinateur 11, est structuré pour analyser les mesures reçues du circuit électronique 181 de façon à localiser le point de contact du doigt sur l'écran 21. Une série de mesures sur les conducteurs de la couche 81 conforme au profil de base combinée à une tension de charge appliquée sur un conducteur échantillonné de la couche 61, valide une absence de matière reliée à la masse en contact avec les lieux de l'écran 21 qui surplombent le conducteur échantillonné. Une série de mesures sur les conducteurs de la couche 81 perturbée relativement au profil de base pour un ou plusieurs conducteurs, 182, 183 dans l'exemple illustré par la figure 4, combinée à une tension de charge appliquée sur un conducteur échantillonné, 162 dans l'exemple illustré par la figure 4, valide une présence de matière reliée à la masse en contact avec le ou les lieux de l'écran 21 qui surplombent à la fois le conducteur échantillonné, 162 dans l'exemple illustré par la figure 4, et le ou les conducteurs à mesure modifiée, 182, 183 dans l'exemple illustré par la figure 4.

Le matériau utilisé pour la couche 91 peut être de nature souple ou rigide. On peut utiliser du poly téréphtalate d'éthylène, (PET) qui a de bonnes qualités de transparence, d'isolation électrique et dont la souplesse permet son adaptation sur des surfaces indifféremment planes ou courbes. On peut encore utiliser du poly méthacrylate de méthyle (PMMA) qui a aussi de bonnes qualités de transparence, d'isolation électrique et dont la rigidité permet d'imposer une surface plane. Il existe notamment des PMMA avec des qualités de transparence rehaussées qui s'apparentent à celles du verre.

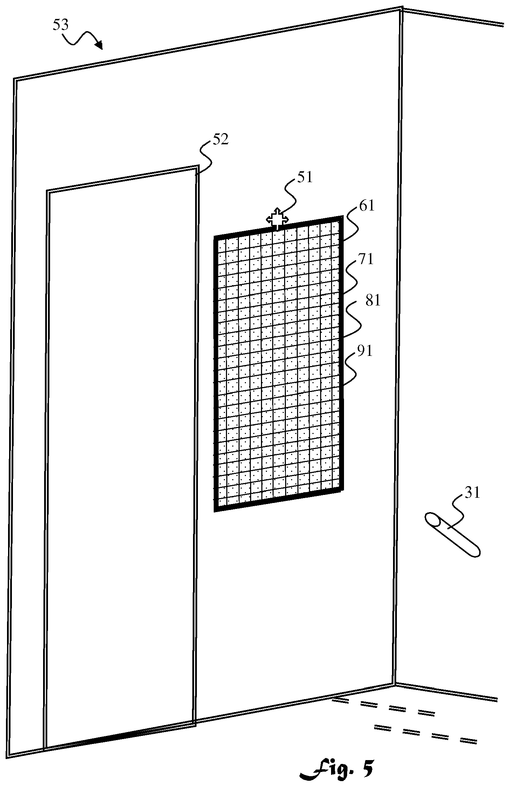

Dans le mode de réalisation de l'écran 21 illustré par les figures 2 et 5, on ajoute au film de quatre couches ci-dessus exposé pour réaliser la fonction tactile de l'écran 21, une pellicule 72 translucide de manière à créer une image réelle visible depuis une face avant de l'écran 21 à partir d'une image projetée par un projecteur 41. Le projecteur 41, par exemple de type vidéoprojecteur, comporte de préférence un objectif grand angle à focale courte de façon à pouvoir être placé à courte distance de l'arrière de l'écran et de limiter ainsi l'encombrement nécessaire à sa mise en œuvre. Le projecteur 41 est connecté à l'ordinateur 11 qui héberge un module logiciel d'affichage structuré pour générer des images sous forme projetable par le projecteur 41.

Le mode de réalisation plus particulièrement représenté sur les figures 2 et 5, a pour avantage de libérer l'intellect de l'utilisateur en lui masquant la composante informatique du système.

Le film tactile et la pellicule translucide sont intégrés dans un cadre encastré affleurant dans une cloison 53 derrière laquelle sont cachés le projecteur 41 et l'ordinateur 11. L'écran 21 se fond ainsi avec le mur de la salle. Une porte 52 permet d'accéder à l'arrière de l'écran 21 pour assurer la mise au point et la maintenance du système. Lorsque la couche 91 à l'avant de l'écran, est réalisée avec un matériau polymère souple tel que le PET, on ajoute à l'arrière de l'écran une lame de matériau transparent rigide par exemple comportant du PMMA, sur laquelle on applique la pellicule translucide et le film tactile de manière à raidir une planéité de l'écran 21.

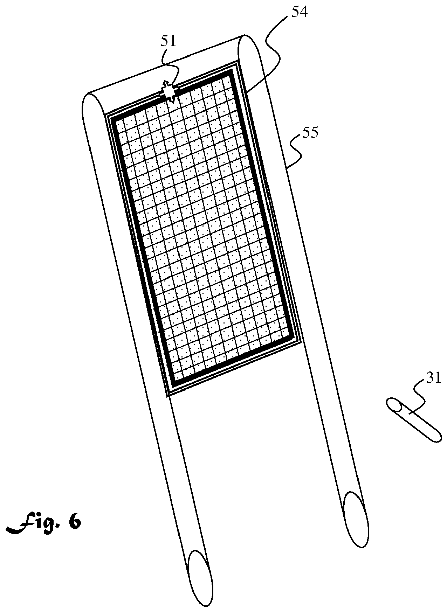

Dans le mode de réalisation de l'écran 21 illustré par la figure 6, on applique le film tactile sur un écran plat 54 par exemple à cristaux liquide (LCD pour Liquid Cristal Display en anglais), à micro-miroirs orientables (DLP pour Digital Light Processing en anglais), à plasma ou autres. Si on dispose d'un écran plat 54 originellement de type tactile offrant une surface de travail suffisante, on peut aussi utiliser directement un tel écran plat sans avoir recours au film tactile exposé ci-dessus.

On monte l'écran plat 54, équipé de fonctions tactiles natives ou apportées par le film ci-dessus exposé, sur un chevalet 55 de manière à reproduire une planche à papiers (paper board) amovible qu'il est possible de déplacer dans la salle. Le montage combinant l'écran plat 54 ainsi équipé au chevalet 55, intègre un processeur de communication dédié (non représenté sur la figure) pour échanger en temps réel avec l'ordinateur 11 les données nécessaires d'une part à une restitution de média sensoriels sous forme visuelle, sonore ou autre et d'autre part à une localisation d'au moins un doigt sur l'écran plat 54, en d'autres termes sur l'écran 21. Le processeur de communication dédié intégré au montage de la figure 6, utilise de préférence un protocole de communication sans fil tel que ceux des normes de la famille 802.11 ou de la famille 802.15.

Le deuxième dispositif est agencé pour détecter au moins une position d'objet distinctivement de celle d'un doigt humain sur l'écran 21.

Le deuxième dispositif comprend un capteur 51 qui permet de mesurer une deuxième grandeur physique différente d'une capacité ou d'une charge électrique. La deuxième grandeur physique est liée à une réception de signal qui varie en fonction de la position de l'objet 31 par rapport à l'écran 21. Le signal est émis par l'objet 31 de manière uniforme, en d'autres termes indépendamment de la position de l'objet sur l'écran. Ceci facilite la réalisation de l'objet 31 car il n'est pas nécessaire de l'équiper avec un capteur, par exemple pour reconnaître une position qu'il pointerait sur l'écran. Le signal est par exemple, à titre purement illustratif et non exhaustif, de type ultrasons, rayon lumineux invisible dans les ultraviolets ou de préférence dans les infrarouges de plus faible niveau énergétique. Pour des ultrasons, le capteur 51 est par exemple un radar à ultrasons. Le signal peut être de tout autre type avec simplement pour contrainte d'être indétectable par les sens humains, de valeur émise indépendante des coordonnées de l'objet sur l'écran et de comporter au moins une composante qui n'interfère pas avec la mesure de la première grandeur physique par le premier dispositif qui reconnaît la position d'un doigt humain sur l'écran 21.

Le capteur 51, par exemple disposé au centre d'une arrête supérieure de l'écran 21, est relié à l'ordinateur 11 par un câble dans le cas des figures 2 et 5 ou par liaison sans fil dans le cas de la figure 6. Un deuxième module logiciel de localisation dans l'ordinateur 11, est structuré pour analyser les mesures reçues du capteur 51 de façon à localiser le point de contact de l'objet 31 sur l'écran 21.

De la sorte, le capteur 51 combiné à l'objet 31, constitue un dispositif agencé pour détecter la position sur l'écran 21 d'au moins un objet semblable à l'objet 31 en le distinguant naturellement d'un doigt humain sans avoir à imposer à l'utilisateur de sélectionner un mode d'interprétation ou de reconnaissance par les modules logiciels résidant sur l'ordinateur 11.

Dans les modes de réalisation pour lesquels on veut s'assurer que le capteur 51 ne capte un signal en provenance de l'objet 31 que lorsque ce dernier est en contact avec la surface de l'écran 21, plusieurs solutions sont proposées.

Une première solution consiste à installer un capteur 51 directif qui ne capte les signaux de la deuxième grandeur physique, par exemple les ultrasons, que dans une faible épaisseur de plan à proximité de la surface de l'écran 21.

Une deuxième solution consiste à combiner au signal relatif à la deuxième grandeur physique, un signal relatif à une troisième grandeur physique, par exemple des rayons infrarouges émis parallèlement à la surface à partir du capteur 51 combinés à des ultrasons émis à partir de l'objet.

Une troisième solution consiste à équiper une extrémité de l'objet 31 avec un interrupteur à poussoir de manière à activer l'émission du signal uniforme, notamment un train continu d'ultrasons à fréquence prédéterminée, lorsque l'objet 31 en contact mécanique avec l'écran 21 commute l'interrupteur en appuyant sur le poussoir.

Le signal est alors émis uniformément avec par exemple une amplitude et une fréquence constantes prédéterminées pour l'objet 31. Une autre fréquence, par exemple d'ultrason, peut être prédéterminée pour un autre objet 31 de façon à distinguer différents objets 31 entre eux. Par exemple un premier objet 31 sous forme d'un crayon d'une couleur donnée est paramétré pour émettre le signal à une fréquence donnée qui génère une fonction d'écriture sur l'écran à la couleur du crayon. Un deuxième objet 31 sous forme d'un crayon d'une autre couleur donnée est paramétré pour émettre le signal à une autre fréquence donnée qui génère une fonction d'écriture sur l'écran à la couleur de l'autre crayon. Par exemple encore, un troisième objet 31 sous forme d'un effaceur est paramétré pour émettre le signal à encore une autre fréquence donnée qui génère une fonction d'effacement sur l'écran. De la sorte l'utilisateur peut écrire ou effacer un motif sur l'écran avec l'objet 31 de son choix de la même manière qu'il le ferait avec un crayon ou une gomme classique sur une planche à papier ou sur un tableau blanc classique, favorisant ainsi une interactivité de type physique entre plusieurs acteurs.

Le système de la figure 1 comporte aussi un mur ou tableau panoramique qui comprend un écran d'affichage 20.

L'écran d'affichage 20 comprend deux dispositifs agencés pour reproduire les fonctionnalités qu'un mur ou un tableau panoramique peut offrir à un ou plusieurs utilisateurs.

Un mur panoramique classique permet généralement à l'utilisateur d'afficher une ou plusieurs pages arrachées de la planche à papiers à côté éventuellement de notes écrites sur de plus petites feuilles ou de documents divers. Le ou les utilisateurs apprécient de pouvoir écrire ensuite sur les pages affichées pour agrémenter leur discours ou approfondir leur réflexion.

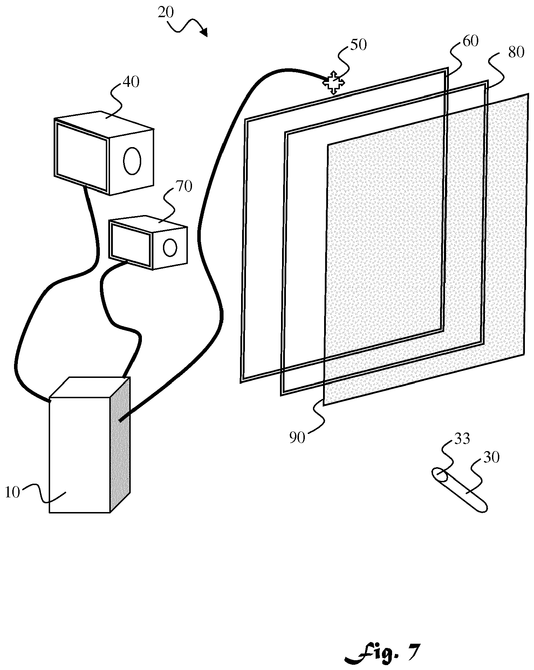

De façon à reproduire les fonctionnalités avantageuses ci-dessus exposées, l'écran d'affichage 20 a des dimensions comparables à celles d'un tableau panoramique classique, par exemple de l'ordre de 3m de diagonale ou plus. L'écran d'affichage 20 comporte avantageusement les deux dispositifs à présent expliqués en référence à la figure 7.

Le premier dispositif est agencé ici encore, pour détecter au moins une position de doigt humain en mesurant une première grandeur physique qui varie en fonction d'un contact de doigt humain sur l'écran 20.

De manière à matérialiser un tableau panoramique au moyen de l'écran 20, le premier dispositif est de préférence de type à détection infrarouge. Par exemple, le premier dispositif comprend un capteur tactile à perturbation de réflexion totale interne de type FTIR (acronyme de l'expression anglaise Frustrated Total Internai Reflexion), particulièrement adapté aux surfaces de grande taille, généralement supérieures à deux mètres de diagonale.

L'écran 20 comprend une plaque constituée typiquement d'au moins trois couches transparentes. La couche 60 est réalisée en un matériau transparent à indice optique élevé, par exemple en polyméthacrylate de méthyle (PMMA pour PolyMethyl MethAcrylate en anglais) d'indice de réfraction égal à 1,49. La couche 80 est réalisée en un matériau transparent à indice optique bas, par exemple contenant un fluoropolymère amorphe induisant un indice de réfraction proche de 1,00. La couche 90, réalisée en un matériau translucide par exemple sous forme de film vinyle de préférence blanc satiné, est disposée sur la face avant de l'écran 20 de façon à diffuser un flux lumineux incident pour créer à sa surface des images réelles à partir de lumière projetée.

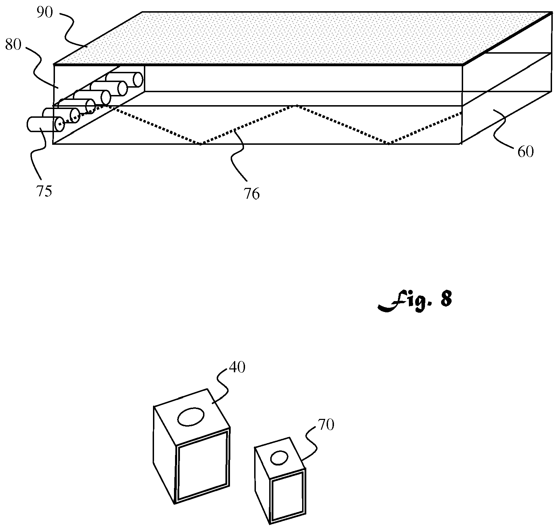

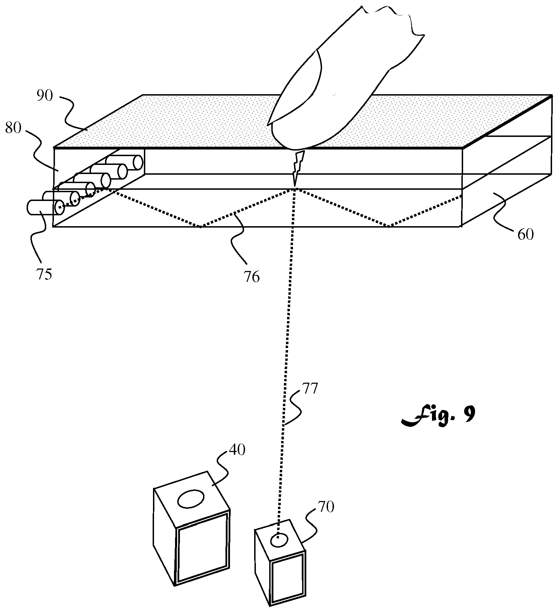

Le fonctionnement tactile de l'écran 20 est expliqué maintenant en référence aux figures 8 et 9.

Une pluralité de diodes électroluminescentes 75 réparties sur le pourtour de la couche 60, sont orientées contre la tranche de la couche 60 pour émettre une pluralité de rayons de lumière infrarouge (IR) 76 dans l'épaisseur de la couche 60. On pourrait utiliser des diodes émettant de la lumière sur d'autres longueurs d'onde pour obtenir l'effet technique expliqué ci-après. La lumière infrarouge présente cependant un intérêt par rapport à la lumière visible qui est celui d'être invisible à l'être humain et ainsi de ne pas perturber son observation visuelle de l'écran. La lumière infrarouge présente aussi un intérêt par rapport à d'autres fréquences de lumière invisible, notamment dans le spectre des ultraviolets, qui est celui d'être de faible niveau énergétique et ainsi de ne pas mettre en danger l'utilisateur pendant son observation visuelle de l'écran.

L'indice de réfraction de la couche 60, supérieur à celui de la couche 80 sur la face avant de l'écran 20 et à celui de l'air sur la face arrière, donne à la couche 60 des qualités de guide d'onde exploitées comme expliqué ci-dessous.

La figure 8 illustre un état de l'écran 20 en absence de matière exerçant une pression sur la face supérieure de la couche 80. Un rayon lumineux 76 émis dans la couche 60 à partir de l'une des diodes électroluminescentes 75 qui atteint la face supérieure ou la face inférieure de la couche 60 avec un angle d'incidence supérieur à l'angle de réfraction respectif donné par la loi de Snell-Descartes, ce qui est le cas de tous les rayons lumineux à une distance suffisamment grande des diodes électroluminescentes 75, est réfléchi vers l'intérieur de la couche 60.

La figure 9 illustre un état de l'écran 20 en présence de matière exerçant une pression sur la face supérieure de la couche 80. C'est le cas par exemple d'un doigt en contact avec la couche 90. La pression exercée par le doigt, a pour effet de modifier l'indice de réfraction de la couche 80 et de dévier au moins partiellement le rayon lumineux 76 vers la face inférieure de la couche 60 correspondant à la face arrière de l'écran 20. Le rayon lumineux 77 issu de la partie déviée du rayon lumineux 76 au point de contact, est capté par une caméra infrarouge 70. La caméra infrarouge 70 est équipée d'un objectif à courte focale de type grand angle de façon à pouvoir capturer une image de la totalité de la face arrière de l'écran 20 en étant placée à courte distance derrière l'écran 20. Pour un écran 20 de grandes dimensions, on peut aussi prévoir plusieurs caméras infrarouges 70, capturant chacune une image infrarouge d'une partie distincte de la face arrière de l'écran 20. Chaque caméra 70 transmet en temps réel ses images infrarouges capturées à un ordinateur 10.

Un premier module logiciel de localisation dans l'ordinateur 10, est structuré pour analyser les images infrarouges reçues de la ou des caméras infrarouges 70 de façon à localiser le ou les points de contact d'un ou plusieurs doigts, voire d'un autre objet sur l'écran 20. En effet, la pluralité de diodes 75 disposées en ruban contre la tranche sur l'ensemble du périmètre de la couche 60, génère une pluralité de rayons lumineux 76 dans le plan de la couche 60, non seulement de sens opposés dans les directions perpendiculaires aux arrêtes de la couche 60 mais en toutes directions résultant de la largeur du faisceau lumineux émis par chaque diode 75 et de réflexions multiples de chaque faisceau aux frontières de la couche 60. Ainsi, même en cas de contact sur un énième point de l'écran 20 derrière un premier point de contact sur le parcours d'un rayon 76, le énième point de contact dévie tout ou partie d'au moins un autre rayon lumineux provenant d'une autre direction. Ainsi, une pluralité de contacts sur l'écran 20, provoque une pluralité de points d'impact sur l'image infrarouge capturée par la ou l'une des caméras infrarouges 70. Les coordonnées de chaque point d'impact sont calculées par un programme de traitement d'image classique. En cas de pluralité de caméras infrarouges 70, le recollage des images bout à bout est effectué lui aussi par un programme de traitement d'image classique comme on en trouve par exemple dans le domaine de la photographie.

Le matériau utilisé pour la couche 90 située à distance de la couche 60, est de préférence traité pour être opaque à la longueur d'onde des rayons lumineux 76 de façon à absorber d'éventuels rayons sur cette longueur d'onde provenant de la salle et d'éviter ainsi que de tels rayons ne perturbe l'image capturée par la caméra 70.

La pellicule translucide de la couche 90 permet de créer une image réelle qui est visible depuis une face avant de l'écran 20, à partir d'une image projetée par un projecteur 40. Le projecteur 40, par exemple de type vidéoprojecteur, comporte de préférence un objectif grand angle à focale courte de façon à pouvoir être placé à courte distance de l'arrière de l'écran et de limiter ainsi l'encombrement nécessaire à sa mise en œuvre. Le projecteur 40 est connecté à l'ordinateur 10 qui héberge un module logiciel d'affichage structuré pour générer des images sous forme projetable par le projecteur 40. On peut aussi mettre en œuvre un logiciel d'affichage qui permet de gérer plusieurs projecteurs 40 de manière à afficher une image de taille panoramique comme on en utilise par exemple en cinématographie sur écran géant.

Le deuxième dispositif est agencé pour détecter au moins une position d'objet distinctivement de celle d'un doigt humain sur l'écran 20.

Le deuxième dispositif comprend un capteur 50 qui permet de mesurer une deuxième grandeur physique différente d'un rayon lumineux circulant dans un guide d'onde. La deuxième grandeur physique est liée à une réception de signal qui varie en fonction de la position de l'objet 30 par rapport à l'écran 20. Le signal est émis par l'objet 30 de manière uniforme, de façon semblable à l'objet 31. Le signal émis par l'objet 30 est de même nature que celui émis par l'objet 31 lorsqu'on veut permettre à l'utilisateur d'employer l'objet 30 ou l'objet 31 indifféremment sur l'écran 20 ou l'écran 21. Le signal émis par l'objet 30 est de nature différente de celle du signal émis par l'objet 31 lorsqu'on veut imposer à l'utilisateur d'employer l'objet 30 et l'objet 31 spécifiquement sur l'écran 20 et l'écran 21.

Le capteur 50, par exemple disposé au centre d'une arrête supérieure de l'écran 20, est relié à l'ordinateur 10 par un câble ou par liaison sans fil. Un deuxième module logiciel de localisation dans l'ordinateur 10, est structuré pour analyser les mesures reçues du capteur 50 de façon à localiser le point de contact de l'objet 30 sur l'écran 20.

De la sorte, le capteur 50 combiné à l'objet 30, constitue ici encore un dispositif agencé pour détecter la position sur l'écran 20 d'au moins un objet semblable à l'objet 30 en le distinguant naturellement d'un doigt humain sans avoir à imposer à l'utilisateur de sélectionner un mode d'interprétation ou de reconnaissance par les modules logiciels résidant sur l'ordinateur 10.

Pour de grandes dimensions de l'écran 20, on peut installer plusieurs capteurs 50, chacun dédié à une portion de l'écran 20.

Le système de la figure 1 comporte aussi une ou plusieurs tablettes personnelles qui comprennent chacune un écran tactile 14, 15, 16 attribué à un participant dans la salle pour laquelle le système est installé. L'écran tactile 14, 15, 16 de chaque tablette est de relativement petite taille, comparable à celle d'un ordinateur portable de sorte qu'un dispositif tactile de type capacitif ou résistif classique lié à la tablette personnelle, convient parfaitement. On peut prévoir de pouvoir écrire sur les tablettes personnelles au moyen d'un stylet du commerce qui ne met pas en œuvre le deuxième dispositif de l'invention.

Les tablettes personnelles sont connectées à un ordinateur central 13 par liaison radio utilisant par exemple un protocole de communication sans fil tel que ceux des normes de la famille 802.11 ou de la famille 802.15.

Un écran 22 est associé à une table horizontale de travail, avec dispositif de détection tactile de type à détection infrarouge, capacitif ou résistif d'un doigt ou d'un objet 32. L'objet 32 émet ou n'émet pas un signal comme le font les objets 30 et 31. Dans ce dernier cas l'objet 32 exécute les mêmes fonctions qu'un doigt par exemple à la manière d'une baguette qui prolonge l'action du bras sur une surface de grande dimension. L'écran 22 est connecté à un ordinateur 12.

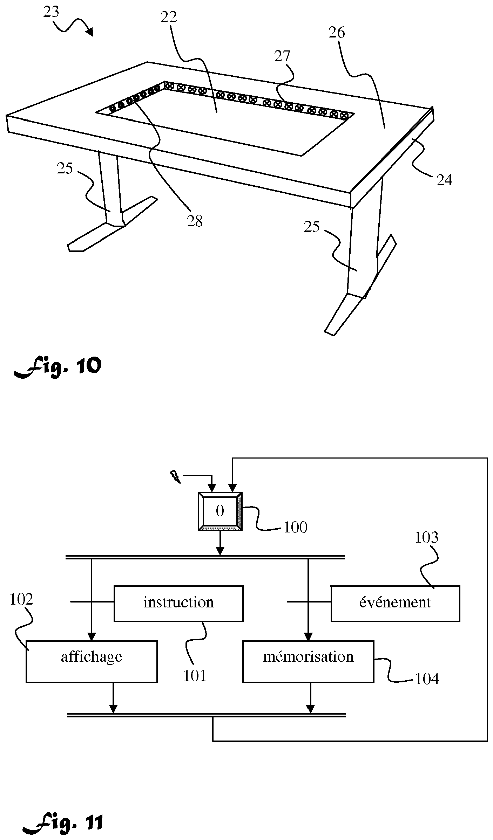

La table horizontale 23 représentée sur la figure 10 comprend un plateau 24 supporté par plusieurs pieds 25, par exemple deux sur la figure 10 qui confèrent une légèreté visuelle en termes de mobilier à la table horizontale 23.

L'écran 22 est incrusté dans l'épaisseur du plateau 24, sensiblement au centre de la face supérieure de manière à ménager de larges bords 26 sur lesquels des participants peuvent déposer divers objets dont notamment des documents ou par exemple leur tablette tactile 14, 15, 16, 17.

L'écran 22 pourrait être du type à rétroprojection comme les écrans 20 et 21 des figures 2 et 7. L'écran 22 de la figure 10 est de préférence un écran plat de un mètre ou plus de diagonale, comprenant les écrans à diodes électroluminescentes, à cristaux liquides et plasmas tels qu'on en rencontre couramment dans le domaine audiovisuel. L'utilisation d'un écran plat de ce type permet une épaisseur relativement faible du plateau 24.

La fonction tactile de l'écran 22 est réalisée par exemple en utilisant une technologie de type à détection infrarouge de type LLPOT (acronyme de l'expression anglaise LED Light Plane Optical Touch). Une rangée de diodes 27 est disposée sur deux bords adjacents de l'écran de façon à émettre une grille de rayons infrarouges qui surplombe en affleurant la face supérieure de l'écran 22. Une rangée de récepteurs infrarouges 28 est disposée sur deux bords adjacents opposés de l'écran de façon à détecter chaque rayon de la grille de rayons infrarouges. Une présence de matière vivante comme celle d'un doigt ou de matière inerte comme celle d'une baguette, en contact avec la face supérieure de l'écran 22, provoque une interruption d'un ou plusieurs rayons infrarouges en provenance d'un bord de l'écran et d'un ou plusieurs rayons infrarouges en provenance du bord adjacent. L'interruption de rayons infrarouges détectée par les capteurs 28 des bords opposés, permet à l'ordinateur 12 de déterminer les coordonnées du point de contact qui se trouve à l'intersection des rayons infrarouges interrompus en provenance de deux bords adjacents.

Les pieds 25 sont adaptés de façon à pouvoir déplacer verticalement le plateau 24 d'une position basse qui convient à des participants assis jusqu'à une position haute qui convient à des participants debout. Le déplacement peut s'effectuer de diverses manières connues, par des vérins hydrauliques ou pneumatiques associés à des électrovannes commandées par l'ordinateur 12, par des vérins électriques ou un moteur électrique commandés ici encore par l'ordinateur 12.

Les ordinateurs 10, 11, 12, 13, sont interconnectés sur un réseau local 19 et comportent un même système d'exploitation qui permet d'exécuter un même programme installé sur chacun des ordinateurs 10, 11, 12, 13.

Le programme est structuré pour détecter automatiquement le ou les écrans associés à l'ordinateur sur lequel il est installé et comment l'ordinateur 10, 11, 12 est configuré pour recevoir des positions de doigt humain détectées par le premier dispositif et des positions d'objet 30, 31, 32 détectées par le deuxième dispositif.

Le programme comprend plusieurs sous programmes qui communiquent entre eux.

Un sous programme de commande est structuré pour :
- allouer au moins une zone d'écran 14, 15, 16, 17, 20, 21, 22 à une fonction de commande ;
- exécuter la fonction de commande lorsque le premier dispositif détecte une position de doigt humain ou le deuxième dispositif détecte une position d'objet 30, 31, 32 dans la zone de l'écran 14, 15, 16, 17, 20, 21, 22 allouée à la fonction de commande.

Un sous programme d'écriture est structuré pour :
- allouer une zone d'écran 14, 15, 16, 17, 20, 21 à l'écriture ;
- modifier dans la zone allouée à l'écriture un aspect visuel local qui suit une position d'objet 30, 31 sur l'écran lorsque l'objet émet son signal uniforme ;
- faire varier la zone allouée à l'écriture en fonction d'un déplacement lié à la position du doigt humain sur l'écran 14, 15, 16, 17, 20, 21.

Sur les écrans 14, 15, 16, 17, la zone allouée à l'écriture matérialise une petite feuille de papier autoadhésive amovible virtuelle.

Une fonction de commande est prévue pour générer à la demande au moins un exemplaire de petite feuille de papier autoadhésive amovible virtuelle sur l'un des écrans de tablette personnelle.

Une autre fonction de commande est prévue pour faire glisser à la demande l'exemplaire généré vers l'un des autres écrans de planche à papier, d'une autre tablette personnelle, de tableau panoramique et/ou de table horizontale de travail.

Une fonction d'écriture est prévue pour modifier à la demande ledit exemplaire à partir de celui des écrans sur lequel il a été généré.

Une autre fonction de commande est aussi prévue pour accéder à un premier contenu hébergé par la base de connaissances 18 en fonction d'actions de requêtes exercées par le doigt humain ou par l'objet sur l'écran de façon à afficher le premier contenu sur l'écran.

Une autre fonction de commande encore est prévue pour enrichir la base de connaissances 18 avec un deuxième contenu affiché sur ledit écran en fonction d'actions d'expression exercées par ledit doigt humain ou par ledit objet sur ledit écran qui affichent ledit deuxième contenu sur ledit écran.

Une fonction de commande est prévue pour insérer un élément multimédia dans la petite feuille de papier autoadhésive amovible virtuelle.

Le programme comprend notamment des instructions de code de programme pour l'exécution des étapes du procédé expliqué à présent en référence à la figure 11 lorsque le programme est exécuté sur l'un des ordinateurs 10 à 13.

Une étape 100 de veille est activée par un allumage de l'ordinateur sur lequel est installé le programme.

Une transition 101 d'exécution est validée par la présence d'une instruction d'affichage commandé par l'un des participants en réunion dans la salle contenant tout ou partie des écrans 14 à 17 et 20 à 22.

Chaque validation de la transition 101 active une étape 102 d'affichage d'une ou plusieurs informations sur un écran tactile d'affichage par un premier équipement de traitement numérique.

Considérons par exemple le premier équipement de traitement numérique constitué par l'une des tablettes 14 à 17 sur laquelle on a installé le programme pour lui permettre de piloter son écran tactile d'affichage dans le cadre du procédé. Une succession d'instructions d'affichage est typiquement commandée par celui des participants en possession de la tablette 14, 15, 16, 17 constituant le premier équipement de traitement numérique.

Une instruction de départ génère par exemple une zone de l'écran de la tablette allouée à l'écriture qui matérialise une petite feuille de papier autoadhésive amovible virtuelle. La petite feuille de papier autoadhésive amovible virtuelle est de préférence nominativement attribuée à la tablette à partir de laquelle la zone allouée à l'écriture qui la matérialise, a été générée de façon à ce que seule la tablette qui constitue le premier équipement de traitement numérique soit autorisée à y introduire ou à y modifier toute information qu'elle est appelée à contenir.

Une instruction suivante écrit par exemple dans la zone allouée à l'écriture, une idée que le participant souhaite matérialiser sous forme d'information manuscrite sur sa tablette au moyen de son stylet.

Alternativement ou concomitamment, une instruction suivante insère par exemple dans la zone allouée à l'écriture, une image ou un extrait de texte imprimé qui matérialise une information restituée à partir de la base de connaissances 18 via l'ordinateur 13.

Considérons par exemple aussi le premier équipement de traitement numérique constitué par l'ordinateur 11 sur lequel on a installé le programme pour lui permettre de piloter l'écran tactile d'affichage 21.

Une ou plusieurs instructions d'affichage peuvent être commandées à distance par les participants en possession d'une tablette 14, 15, 16, 17 constituant alors dans ce cas un deuxième équipement de traitement numérique, par exemple en envoyant un exemplaire de petite feuille de papier autoadhésive amovible virtuelle vers le premier équipement de traitement numérique pour l'afficher sur l'écran tactile d'affichage 21.

D'autres instructions d'affichage peuvent être commandées localement par un participant faisant face à la planche à papiers matérialisée par l'écran 21, par exemple en utilisant la fonction tactile de l'écran pour faire glisser l'exemplaire de petite feuille de papier autoadhésive amovible virtuelle reçu de façon à l'afficher sur un autre emplacement de l'écran tactile d'affichage 21.

Une succession d'instructions d'affichage est typiquement commandée par l'un des participants à proximité de la planche à papiers matérialisée par l'écran 21 piloté par l'ordinateur 11 constituant ici le premier équipement de traitement numérique.

Une instruction de départ génère par exemple une zone de tout ou partie de l'écran de l'écran 21 allouée à l'écriture qui matérialise une feuille de papier virtuelle de la planche à papier. La zone allouée à l'écriture de la feuille de papier virtuelle est de préférence générée sur l'ensemble de l'écran à l'exception des zones attribuées à de petites feuilles de papier autoadhésives amovibles virtuelles reçues sur lesquelles seul l'un des deuxièmes équipements de traitement numérique est autorisé à y introduire ou à y modifier toute information qu'elle contient.

Une instruction suivante écrit par exemple dans la zone allouée à l'écriture, une idée que le participant souhaite matérialiser sous forme d'information manuscrite sur la planche à papier en mettant l'un des objets 31 dont il dispose en contact avec l'écran 21.

Alternativement ou concomitamment, une instruction suivante insère ici encore par exemple dans ou hors de la zone allouée à l'écriture, un document multimédia appartenant à un ensemble comprenant des images, des extraits de texte imprimé ou autres, lesquels matérialisant des informations restituables à partir de la base de connaissances 18 via l'ordinateur 13.

Considérons par exemple encore le premier équipement de traitement numérique constitué par l'ordinateur 10 sur lequel on a installé le programme pour lui permettre de piloter l'écran tactile d'affichage 20.

Une ou plusieurs instructions d'affichage peuvent ici encore être commandées à distance par les participants en possession d'une tablette 14, 15, 16, 17 constituant alors dans ce cas l'un de plusieurs deuxièmes équipements de traitement numérique possibles, par exemple en envoyant un exemplaire de petite feuille de papier autoadhésive amovible virtuelle vers le premier équipement de traitement numérique pour l'afficher sur l'écran tactile d'affichage 20. De même, une ou plusieurs instructions d'affichage peuvent être commandées à distance par l'un des participants en face de la planche à papier matérialisée par l'écran 21 et pilotable par l'ordinateur 11 constituant alors un deuxième équipement de traitement numérique supplémentaire, par exemple en envoyant un exemplaire de feuille de papier virtuelle vers le premier équipement de traitement numérique pour l'afficher sur l'écran tactile d'affichage 10.

D'autres instructions d'affichage peuvent être commandées localement par un participant faisant face au tableau panoramique matérialisé par l'écran 20, par exemple en utilisant la fonction tactile de l'écran pour faire glisser l'exemplaire de petite feuille de papier autoadhésive amovible virtuelle en provenance d'une tablette ou l'exemplaire de feuille de papier virtuelle en provenance de la planche à papiers, de façon à l'afficher sur un autre emplacement de l'écran tactile d'affichage 20, par exemple pour déplacer vers une deuxième feuille de papier virtuelle, un exemplaire de petite feuille de papier autoadhésive amovible virtuelle reçue attachée à une première feuille de papier virtuelle.

Une succession d'instructions d'affichage est typiquement commandée par l'un des participants à proximité du tableau panoramique matérialisé par l'écran 20 piloté par l'ordinateur 10 constituant ici le premier équipement de traitement numérique.

Une instruction suivante écrit par exemple dans une zone allouée à l'écriture, une idée ou une association d'idée que le participant souhaite ajouter sous forme d'information manuscrite sur le tableau panoramique en mettant l'un des objets 30 dont il dispose en contact avec l'écran 20.

Alternativement ou concomitamment, une instruction suivante insère ici encore par exemple dans ou hors de la zone allouée à l'écriture, un document multimédia appartenant à l'ensemble comprenant des images, des extraits de texte imprimé ou autres, lesquels matérialisant des informations restituables à partir de la base de connaissances 18 via l'ordinateur 13.

Le programme peut comprendre aussi d'autres instructions, par exemple de conversion de caractères manuscrits en caractères d'imprimerie, associées à un logiciel de reconnaissance de caractères, de manière à pouvoir afficher l'information sous forme plus intelligible, quelque soit celle des tablettes 14, 15, 16, 17 ou celui des ordinateurs 10, 11 constituant le premier équipement de traitement numérique.

L'un des documents multimédia affichable sur l'un ou l'autre des écrans 20 ou 21, peut provenir de la table horizontale 23 qui en facilite la sélection comme nous le voyons à présent.

Nous considérons à présent le premier équipement de traitement numérique constitué par l'ordinateur 12 sur lequel on a installé le programme pour lui permettre de piloter l'écran tactile d'affichage 22.

Des instructions d'affichage peuvent être commandées localement par un ou plusieurs participants répartis autour de l'écran 22 enchâssé dans la table horizontale 23, par exemple en utilisant la fonction tactile de l'écran pour faire glisser des exemplaires de documents multimédia en provenance de la base de connaissance 18.

Alternativement ou concomitamment, une instruction suivante expédie sous forme de message l'information comprise dans un document multimédia sélectionné par exemple vers le tableau panoramique au moyen d'une fonction tactile dédiée.

Une transition 103 de détection est validée dans celui des ordinateurs 10, 11, 12 considéré comme premier équipement de traitement numérique, par la présence d'un événement contextuel en relation avec l'écran tactile d'affichage 20, 21, 22 piloté par le premier équipement de traitement numérique.

Chaque validation de la transition 103 active de façon automatique une étape 104 de mémorisation de l'information affichée sur l'écran en l'associant à l'événement contextuel

Considérons par exemple à nouveau le premier équipement de traitement numérique constitué par l'ordinateur 11 sur lequel on a installé le programme pour lui permettre de piloter l'écran tactile d'affichage 21.

L'événement est par exemple lié à une réception par l'ordinateur 11 d'un message en provenance d'une tablette 14, 15, 16, 17 constituant alors dans ce cas un deuxième équipement de traitement numérique. Le message reçu comporte typiquement l'information contenue dans un exemplaire de petite feuille de papier autoadhésive amovible en vue de l'afficher sur l'écran tactile d'affichage 21.

L'information contenue dans la petite feuille de papier autoadhésive amovible est alors mémorisée automatiquement par l'ordinateur 11 dans la base de connaissances 18 qui est partagée via le réseau 19 par les autres ordinateurs 10, 12, 13 et par les tablettes 14, 15, 16, 17 qui, vus du programme installé sur l'ordinateur 11, constituent d'autres équipement de traitement numérique. L'information est de préférence mais non nécessairement, mémorisée avec des données descriptives de l'événement, par exemple une référence de tablette émettrice ou de feuille de planche à papiers réceptrice comprenant notamment d'autres informations affichées lorsque le participant en possession de la tablette émettrice a éprouvé le besoin de coller sa petite feuille de papier autoadhésive amovible virtuelle sur la planche à papiers matérialisée par l'écran 21. Les données descriptives peuvent notamment comprendre un indicateur temporel d'apparition de l'événement tel que la date et l'heure de réception du message de façon à mieux pouvoir corréler plusieurs enregistrements d'information entre eux.

D'autres événements peuvent être détectés par l'ordinateur 11, notamment ceux liés aux actions d'un participant faisant face à la planche à papiers matérialisée par l'écran 21, par exemple en utilisant la fonction tactile de l'écran pour faire glisser l'exemplaire de petite feuille de papier autoadhésive amovible virtuelle reçu de façon à l'afficher sur un autre emplacement de l'écran tactile d'affichage 21. Un retrait de son doigt de l'écran par le participant, constitue un événement représentatif d'un certain degré de satisfaction, au moins passager, sur la nouvelle position de l'exemplaire de petite feuille de papier autoadhésive amovible virtuelle ou représentatif d'une pause nécessaire à une évolution de sa réflexion. Il est alors intéressant de mémoriser l'information à ce moment avec les données descriptives de l'événement qui permettront ensuite d'en mesurer le contexte. Il en est de même lorsque le retrait de contact ne porte pas sur la matière vivante d'un doigt mais sur la matière inerte de l'objet 31, marquant ainsi une fin d'écriture ou d'effacement de texte ou de dessin.

Considérons par exemple encore à nouveau le premier équipement de traitement numérique constitué par l'ordinateur 10 sur lequel on a installé le programme pour lui permettre de piloter l'écran tactile d'affichage 20.

L'événement est alors par exemple lié à une réception par l'ordinateur 10 d'un message en provenance de l'ordinateur 11 constituant dans ce cas un deuxième équipement de traitement numérique. Le message reçu comporte typiquement l'information contenue dans un exemplaire de feuille de planche à papier en vue de l'afficher sur l'écran tactile d'affichage 20.

L'information contenue dans la feuille de planche à papier est alors mémorisée automatiquement par l'ordinateur 10 dans la base de connaissances 18. L'information est de préférence mais non nécessairement, mémorisée avec des données descriptives de l'événement, par exemple une référence de feuille de planche à papiers émettrice et/ou une configuration de tableau panoramique comprenant notamment d'autres informations affichées. Les données descriptives peuvent ici encore comprendre un indicateur temporel d'apparition de l'événement tel que la date et l'heure de réception du message de façon à mieux pouvoir corréler plusieurs enregistrements d'information entre eux.

D'autres événements peuvent être détectés par l'ordinateur 10, notamment ceux liés aux actions d'un ou plusieurs participants faisant face au tableau panoramique matérialisé par l'écran 20, par exemple en utilisant la fonction tactile de l'écran pour faire glisser l'exemplaire de feuille de planche à papier reçu de façon à l'afficher sur un autre emplacement de l'écran tactile d'affichage 20 ou de le masquer. Un retrait de son doigt de l'écran par l'un des participants, constitue un événement représentatif d'un certain degré de satisfaction, au moins passager, sur la nouvelle position de l'exemplaire de feuille de planche à papier ou représentatif d'une pause nécessaire à une évolution de réflexion individuelle ou commune. Il est alors intéressant de mémoriser l'information à ce moment avec les données descriptives de l'événement qui permettront ensuite d'en mesurer le contexte. Il en est de même lorsque le retrait de contact ne porte pas sur la matière vivante d'un doigt mais sur la matière inerte de l'objet 30, marquant ainsi une fin d'écriture ou d'effacement de texte ou de dessin.

A propos de la table 23 pour laquelle on a installé le programme sur l'ordinateur 12 de façon à lui permettre de piloter l'écran tactile d'affichage 22, nous considérons ci-dessous le premier équipement de traitement numérique constitué par l'ordinateur 12.

L'événement est alors par exemple lié à une réception par l'ordinateur 12 d'un message en provenance de l'ordinateur 13 constituant dans ce cas un deuxième équipement de traitement numérique. Le message reçu comporte typiquement l'information contenue dans un document multimédia extrait de la base de connaissances 18 en vue de l'afficher sur l'écran tactile d'affichage 22.

L'information déjà contenue dans la base de connaissances 18, est dans ce cas, de préférence mais non nécessairement, associée à une mémorisation de données descriptives de l'événement, par exemple un lien avec d'autres documents multimédia comprenant de l'information déjà affichée sur l'écran 22 de la table 23. Les données descriptives peuvent comprendre aussi comme précédemment un indicateur temporel d'apparition de l'événement.

D'autres événements peuvent être détectés par l'ordinateur 12, notamment ceux liés aux actions d'un ou plusieurs participants répartis autour de la table 23 pour interagir avec l'écran 22, par exemple en utilisant la fonction tactile de l'écran pour faire glisser les uns sur les autres ou les uns à côté des autres différents exemplaires de documents multimédia sur l'écran tactile d'affichage 20 ou d'en expédier un vers le tableau panoramique après l'avoir sélectionné. Un retrait de doigt de l'écran par l'un des participants, constitue un événement représentatif d'un certain degré de satisfaction, au moins passager, sur la nouvelle position du document multimédia ou représentatif d'une pause nécessaire à une évolution de réflexion individuelle ou commune. Il est alors intéressant de mémoriser l'information à ce moment avec les données descriptives de l'événement qui permettront ensuite d'en mesurer le contexte. Il en est de même lorsque le retrait de contact ne porte pas sur la matière vivante d'un doigt mais sur la matière inerte de l'objet 32, marquant ainsi une fin de manipulation de document multimédia.

Les données descriptives associées à l'événement peuvent aussi comprendre une mesure de hauteur du plateau 24 contrôlée par un module spécifique de type connu (non représenté) connecté à l'ordinateur 12 pour monter et descendre le plateau 24.

Un événement lié à la stabilisation du plateau 24 après mise en mouvement, est intéressant pour provoquer une mémorisation de l'information affichée à ce moment sur l'écran 22 car un déplacement en relation avec l'écran tactile d'affichage 22, reflète un état d'esprit des participants réunis autour de la table pour interagir de préférence en position debout, assise ou semi assise.

Le système et le procédé de communication exposés ci-dessus reproduisent une interactivité de type physique entre au moins deux participants à une réunion, en permettant de mémoriser ou enregistrer automatiquement différentes étapes pertinentes de leurs interactions de manière naturelle, en d'autres termes sans les perturber dans le partage de leur réflexion. L'information alors stockée dans la base de connaissances est disponible pour être utilisée, enrichie ou analysée dans des réunions suivantes.

## Revendications

1. Système de communication pour reproduire une interactivité de type physique entre au moins deux acteurs, notamment deux participants à une réunion, comprenant :
au moins un écran d'affichage (20, 21, 22) de dimensions comparables à celles d'un tableau blanc, et qui comporte un premier dispositif agencé pour détecter au moins une position de doigt humain en mesurant une première grandeur physique qui varie en fonction d'un contact de doigt humain sur ledit écran (20, 21, 22),
**caractérisé en ce qu'**il comprend :
- une pluralité d'objets (30, 31, 32) émettant un signal uniforme à des fréquences différentes distinguant les objets entre eux, ledit signal étant un train continu d'ultrasons à fréquence prédéterminée,
- un deuxième dispositif agencé pour détecter au moins une position d'objet (30, 31, 32) distinctivement de celle d'un doigt humain, en mesurant une deuxième grandeur physique liée à une réception dudit signal uniforme qui varie en fonction de la position de l'objet (30, 31, 32) par rapport à l'écran (20, 21, 22), et
- un ordinateur (10, 11, 12) configuré au moins pour recevoir la position du doigt humain, détectée par le premier dispositif, et la position d'un objet parmi la pluralité d'objets, détectée par le deuxième dispositif ;
et **en ce que** ledit ordinateur est programmé au moins pour :
- allouer une zone de l'écran (20, 21, 22) à l'écriture ;
- modifier dans ladite zone allouée à l'écriture un aspect visuel local qui suit la position de l'objet (30, 31, 32) sur l'écran lorsque ledit objet émet ledit signal uniforme, pour générer une fonction d'écriture à une couleur donnée ou d'effacement qui dépend de la fréquence du signal de l'objet dont la position est détectée ;
- faire varier ladite zone allouée à l'écriture en fonction d'un déplacement lié à la position du doigt humain sur l'écran (20, 21, 22).

2. Système selon la revendication 1, **caractérisé en ce que** ladite zone allouée à l'écriture matérialise une petite feuille de papier autoadhésive amovible virtuelle.

3. Système selon l'une des revendications 1 ou 2, **caractérisé en ce que** ledit ordinateur est programmé au moins pour :
- allouer au moins une zone de l'écran (20, 21, 22) à une fonction de commande en relation avec un affichage d'information ;
- exécuter ladite fonction de commande lorsque ledit premier dispositif détecte une position de doigt humain ou ledit deuxième dispositif détecte une position dudit objet (30, 31, 32) dans la zone de l'écran (20, 21, 22) allouée à ladite fonction de commande.

4. Système selon l'une des revendications précédentes, **caractérisé en ce que** ledit objet (30, 31, 32) est équipé de manière à émettre ledit signal uniforme lorsque l'objet est en contact mécanique avec ledit écran (20, 21, 22).

5. Système selon l'une des revendications précédentes, **caractérisé en ce qu'**il comporte au moins un tableau blanc qui comprend ledit écran (21), un mur panoramique qui comprend ledit écran (20), et/ou une table horizontale de travail qui comprend ledit écran (22), et **en ce que** ledit premier dispositif est respectivement de type capacitif lié audit écran de tableau blanc, de type à détection infrarouge lié audit écran de mur panoramique, de type à détection infrarouge, capacitif ou résistif lié audit écran de table horizontal.

6. Système selon l'une des revendications précédentes, **caractérisé en ce qu'**il comporte au moins une tablette personnelle qui comprend ledit écran et **en ce que** ledit premier dispositif est de type capacitif et lié à ladite tablette personnelle.

7. Système selon l'une des revendications précédentes, **caractérisé en ce que** ledit ordinateur (10, 11, 12, 13) est programmé pour :
- générer à la demande au moins un exemplaire de petite feuille de papier autoadhésive amovible virtuelle sur l'un des écrans de tableau blanc, de tablette personnelle, de mur panoramique et/ou de table horizontale de travail ;
- faire glisser à la demande ledit exemplaire vers l'un des autres écrans de tableau blanc, de tablette personnelle, de mur panoramique et/ou de table horizontale de travail ;
- modifier à la demande ledit exemplaire à partir de celui des écrans sur lequel il a été généré et/ou sur lequel il a glissé.

8. Système selon l'une des revendications 2 ou 7, **caractérisé en ce que** ledit ordinateur est programmé pour :
- insérer dans ladite petite feuille un élément multimédia.

9. Système selon l'une des revendications précédentes, **caractérisé en ce que** ledit ordinateur (10, 11, 12) est connecté à une base de connaissances (18) et **en ce qu'**il est programmé pour :
- accéder à un premier contenu hébergé par ladite base de connaissances (18) en fonction d'actions de requêtes exercées par ledit doigt humain ou par ledit objet sur ledit écran de façon à afficher ledit premier contenu sur ledit écran ;
- enrichir ladite base de connaissances (18) avec un deuxième contenu affiché sur ledit écran en fonction d'actions d'expression exercées par ledit doigt humain ou par ledit objet sur ledit écran qui affichent ledit deuxième contenu sur ledit écran.

10. Procédé de communication pour reproduire une interactivité de type physique entre au moins deux acteurs, notamment deux participants à une réunion, comprenant des étapes consistant à détecter au moins une position de doigt humain en mesurant une première grandeur physique qui varie en fonction d'un contact de doigt humain sur un écran (20, 21, 22) de dimensions comparables à celles d'un tableau blanc, **caractérisé en ce qu'**il comprend des étapes consistant à :
- détecter distinctivement de la position du doigt humain au moins une position d'un objet parmi une pluralité d'objets (30, 31, 32) équipés de manière à émettre un signal uniforme à des fréquences différentes distinguant les objets entre eux, le dit signal étant sous forme d'un train continu d'ultrasons à fréquence prédéterminée, en mesurant une deuxième grandeur physique liée à une réception dudit signal uniforme qui varie en fonction de la position de l'objet (30, 31, 32) par rapport à l'écran (20, 21, 22),
- allouer une zone de l'écran (20, 21, 22) à l'écriture ;
- recevoir la position dudit objet détectée ;
- modifier dans ladite zone allouée à l'écriture un aspect visuel local qui suit la position de l'objet (30, 31, 32) sur l'écran lorsque ledit objet émet ledit signal uniforme, pour générer une fonction d'écriture à une couleur donnée ou d'effacement qui dépend de la fréquence du signal de l'objet dont la position est détectée ;
- recevoir la position du doigt humain détectée ;
- faire varier ladite zone allouée à l'écriture en fonction d'un déplacement lié à la position du doigt humain sur l'écran (20, 21, 22).

11. Procédé selon la revendication 10, **caractérisé en ce que** ladite zone allouée à l'écriture matérialise une petite feuille de papier autoadhésive amovible virtuelle.

12. Procédé selon la revendication 10 ou 11, comprenant des étapes consistant à :
- afficher (102) au moins une information par un premier équipement de traitement numérique sur un écran tactile d'affichage, en exécutant (101) une instruction commandée par l'un des acteurs ou participants ; et
- mémoriser (104) ladite information en l'associant à un événement contextuel en relation avec ledit écran tactile d'affichage, activée de façon automatique par détection (103) du dit événement par ledit premier équipement de traitement numérique.

13. Procédé selon la revendication 12, **caractérisé en ce que** ledit événement est lié à un retrait de contact de matière vivante ou inerte avec ledit écran tactile d'affichage.

14. Procédé selon la revendication 12, **caractérisé en ce que** ledit événement est lié à une réception par ledit premier équipement de traitement numérique qui pilote ledit écran tactile d'affichage, d'un message en provenance d'un deuxième équipement de traitement numérique et comportant ladite information à afficher.

15. Procédé selon la revendication 12, **caractérisé en ce que** ledit événement est lié à un déplacement en relation avec ledit écran tactile d'affichage.

16. Procédé selon l'une des revendications 12 à 15, **caractérisé en ce que** ladite information est mémorisée dans une base de connaissances partagée par plusieurs équipements de traitement numérique avec des données descriptives dudit événement.

17. Procédé selon l'une des revendications 12 à 16, **caractérisé en ce que** lesdites données descriptives dudit événement comprennent un indicateur temporel d'apparition dudit événement.

18. Procédé selon l'une des revendications 16 ou 17, **caractérisé en ce que** ladite information est restituée à partir de ladite base de connaissances.

19. Procédé selon l'une des revendications 12 à 18, **caractérisé en ce que** ladite information est localisée dans une zone allouée à l'écriture qui matérialise une petite feuille de papier autoadhésive amovible virtuelle ou qui matérialise une grande feuille de papier détachable d'une pile de feuilles de papier virtuelles.

20. Procédé selon l'une des revendications 10 à 19, **caractérisé en ce qu'**au moins l'une de plusieurs zones allouées à l'écriture est générée à partir d'un équipement de traitement de l'information qui seul est autorisé à modifier toute information contenue dans ladite zone allouée à l'écriture générée.

21. Programme d'ordinateur comprenant des instructions de code de programme pour l'exécution des étapes du procédé selon l'une des revendications 10 à 20 lorsque ledit programme est exécuté sur au moins un ordinateur.

## Patentansprüche

1. Kommunikationssystem zum Reproduzieren einer physischen Interaktivität zwischen wenigstens zwei Akteuren, insbesondere zwei Teilnehmern einer Zusammenkunft, welches umfasst:
wenigstens einen Anzeigebildschirm (20, 21, 22) mit Abmessungen, die mit denjenigen eines Whiteboards vergleichbar sind, und der eine erste Vorrichtung aufweist, die dafür ausgelegt ist, wenigstens eine Position eines menschlichen Fingers durch Messen einer ersten physikalischen Größe, die in Abhängigkeit von einem Kontakt eines menschlichen Fingers auf dem Bildschirm (20, 21, 22) variiert, zu erkennen,
**dadurch gekennzeichnet, dass** es umfasst:
- mehrere Objekte (30, 31, 32), die ein gleichförmiges Signal mit unterschiedlichen Frequenzen aussenden, welche die Objekte voneinander unterscheiden, wobei das Signal ein kontinuierlicher Strom von Ultraschalltönen mit vorbestimmter Frequenz ist,
- eine zweite Vorrichtung, die dafür ausgelegt ist, wenigstens eine Position eines Objekts (30, 31, 32), die von derjenigen eines menschlichen Fingers verschieden ist, durch Messen einer mit einem Empfang des gleichförmigen Signals zusammenhängenden zweiten physikalischen Größe, die in Abhängigkeit von der Position des Objekts (30, 31, 32) in Bezug auf den Bildschirm (20, 21, 22) variiert, zu erkennen, und
- einen Computer (10, 11, 12), der wenigstens dafür ausgelegt ist, die von der ersten Vorrichtung erkannte Position des menschlichen Fingers und die von der zweiten Vorrichtung erkannte Position eines Objekts von den mehreren Objekten zu empfangen,
und dadurch, dass der Computer wenigstens dafür programmiert ist:
- einen Bereich des Bildschirms (20, 21, 22) für das Schreiben zuzuweisen;
- in dem für das Schreiben zugewiesenen Bereich einen lokalen visuellen Aspekt zu ändern, welcher der Position des Objekts (30, 31, 32) auf dem Bildschirm folgt, wenn das Objekt das gleichförmige Signal aussendet, um eine Funktion des Schreibens mit einer gegebenen Farbe oder des Wischens zu erzeugen, die von der Frequenz des Signals des Objekts abhängt, dessen Position erkannt wird;
- den für das Schreiben zugewiesenen Bereich in Abhängigkeit von einer mit der Position des menschlichen Fingers auf dem Bildschirm (20, 21, 22) zusammenhängenden Verschiebung zu variieren.

2. System nach Anspruch 1, **dadurch gekennzeichnet, dass** der für das Schreiben zugewiesene Bereich ein virtuelles entfernbares selbsthaftendes kleines Blatt Papier darstellt.

3. System nach einem der Ansprüche 1 oder 2, **dadurch gekennzeichnet, dass** der Computer wenigstens dafür programmiert ist:
- wenigstens einen Bereich des Bildschirms (20, 21, 22) einer Steuerungsfunktion zuzuweisen, die mit einer Anzeige von Informationen zusammenhängt;
- diese Steuerungsfunktion auszuführen, wenn die erste Vorrichtung eine Position eines menschlichen Fingers oder die zweite Vorrichtung eine Position des Objekts (30, 31, 32) in dem Bereich des Bildschirms (20, 21, 22) erkennt, welcher der Steuerungsfunktion zugewiesen ist.

4. System nach einem der vorhergehenden Ansprüche, **dadurch gekennzeichnet, dass** das Objekt (30, 31, 32) dafür ausgelegt ist, das gleichförmige Signal auszusenden, wenn sich das Objekt in mechanischem Kontakt mit dem Bildschirms (20, 21, 22) befindet.

5. System nach einem der vorhergehenden Ansprüche, **dadurch gekennzeichnet, dass** es wenigstens ein Whiteboard, welches den Bildschirm (21) umfasst, eine Panoramawand, welche den Bildschirm (20) umfasst, und/oder einen horizontalen Arbeitstisch, welcher den Bildschirm (22) umfasst, aufweist, und dadurch, dass die erste Vorrichtung vom kapazitiven Typ und mit dem Bildschirm des Whiteboards verbunden ist, vom Typ mit Infraroterfassung und mit dem Bildschirm der Panoramawand verbunden ist bzw. vom Typ mit Infraroterfassung, vom kapazitiven Typ oder vom Widerstandstyp und mit dem Bildschirm des horizontalen Tisches verbunden ist.

6. System nach einem der vorhergehenden Ansprüche, **dadurch gekennzeichnet, dass** es wenigstens ein persönliches Tablet aufweist, welches den Bildschirm umfasst, und dadurch, dass die erste Vorrichtung vom kapazitiven Typ und mit dem persönlichen Tablet verbunden ist.

7. System nach einem der vorhergehenden Ansprüche, **dadurch gekennzeichnet, dass** der Computer (10, 11, 12, 13) dafür programmiert ist:
- auf Anforderung wenigstens ein Exemplar eines virtuellen entfernbaren selbsthaftenden kleinen Blattes Papier auf einem der Bildschirme des Whiteboards, des persönlichen Tablets, der Panoramawand und/oder des horizontalen Arbeitstisches zu erzeugen;
- auf Anforderung dieses Exemplar zu einem der anderen Bildschirme des Whiteboards, des persönlichen Tablets, der Panoramawand und/oder des horizontalen Arbeitstisches gleiten zu lassen;
- auf Anforderung dieses Exemplar von demjenigen der Bildschirm aus zu ändern, auf dem es erzeugt worden ist und/oder auf den es geglitten ist.

8. System nach einem der Ansprüche 2 oder 7, **dadurch gekennzeichnet, dass** der Computer dafür programmiert ist:
- in das kleine Blatt ein Multimedia-Element einzufügen.

9. System nach einem der vorhergehenden Ansprüche, **dadurch gekennzeichnet, dass** der Computer (10, 11, 12) mit einer Wissensdatenbank (18) verbunden ist, und dadurch, dass er dafür programmiert ist:
- auf einen ersten Inhalt, der von der Wissensdatenbank (18) gehostet wird, in Abhängigkeit von Anforderungsaktionen zuzugreifen, die von dem menschlichen Finger oder von dem Objekt auf dem Bildschirm ausgeführt werden, um den ersten Inhalt auf dem Bildschirm anzuzeigen;
- die Wissensdatenbank (18) mit einem zweiten Inhalt anzureichern, der auf dem Bildschirm in Abhängigkeit von durch den menschlichen Finger oder durch das Objekt ausgeführten Ausdrucksaktionen angezeigt wird, welche den zweiten Inhalt auf dem Bildschirm anzeigen.

10. Kommunikationsverfahren zum Reproduzieren einer physischen Interaktivität zwischen wenigstens zwei Akteuren, insbesondere zwei Teilnehmern einer Zusammenkunft, welches Schritte umfasst, die darin bestehen, wenigstens eine Position eines menschlichen Fingers durch Messen einer ersten physikalischen Größe zu erkennen, die in Abhängigkeit von einem Kontakt eines menschlichen Fingers auf einem Bildschirm (20, 21, 22) mit Abmessungen, die mit denjenigen eines Whiteboards vergleichbar sind, variiert, **dadurch gekennzeichnet, dass** es die folgenden Schritte umfasst:
- Erkennen, bei gleichzeitiger Unterscheidung von der Position des menschlichen Fingers, wenigstens einer Position eines Objekts von mehreren Objekten (30, 31, 32), die dafür ausgelegt sind, ein gleichförmiges Signal mit unterschiedlichen Frequenzen auszusenden, welche die Objekte voneinander unterscheiden, wobei das Signal die Form eines kontinuierlichen Stroms von Ultraschalltönen mit vorbestimmter Frequenz hat, durch Messen einer mit einem Empfang des gleichförmigen Signals zusammenhängenden zweiten physikalischen Größe, die in Abhängigkeit von der Position des Objekts (30, 31, 32) in Bezug auf den Bildschirm (20, 21, 22) variiert,
- Zuweisen eines Bereichs des Bildschirms (20, 21, 22) für das Schreiben;
- Empfangen der erkannten Position des Objekts;
- Ändern, in dem für das Schreiben zugewiesenen Bereich, eines lokalen visuellen Aspekts, welcher der Position des Objekts (30, 31, 32) auf dem Bildschirm folgt, wenn das Objekt das gleichförmige Signal aussendet, um eine Funktion des Schreibens mit einer gegebenen Farbe oder des Wischens zu erzeugen, die von der Frequenz des Signals des Objekts abhängt, dessen Position erkannt wird;
- Empfangen der erkannten Position des menschlichen Fingers;
- Variieren des für das Schreiben zugewiesenen Bereichs in Abhängigkeit von einer mit der Position des menschlichen Fingers auf dem Bildschirm (20, 21, 22) zusammenhängenden Verschiebung.

11. Verfahren nach Anspruch 10, **dadurch gekennzeichnet, dass** der für das Schreiben zugewiesene Bereich ein virtuelles entfernbares selbsthaftendes kleines Blatt Papier darstellt.

12. Verfahren nach Anspruch 10 oder 11, welches die folgenden Schritte umfasst:
- Anzeigen (102) wenigstens einer Information durch eine erste digitale Verarbeitungseinrichtung auf einem Berührungsanzeigebildschirm, indem eine Anweisung ausgeführt wird (101), die von einem der Akteure oder Teilnehmer gesteuert wird; und
- Speichern (104) der Information, wobei sie einem Kontextereignis im Zusammenhang mit dem Berührungsanzeigebildschirm zugeordnet wird, automatisch aktiviert durch Erkennung (103) des Ereignisses durch die erste digitale Verarbeitungseinrichtung.

13. Verfahren nach Anspruch 12, **dadurch gekennzeichnet, dass** das Ereignis mit einer Aufhebung eines Kontakts von leitendem oder inertem Material mit dem Berührungsanzeigebildschirm zusammenhängt.

14. Verfahren nach Anspruch 12, **dadurch gekennzeichnet, dass** das Ereignis mit einem Empfang, durch die erste digitale Verarbeitungseinrichtung, welche den Berührungsanzeigebildschirm steuert, einer Nachricht zusammenhängt, die von einer zweiten digitalen Verarbeitungseinrichtung stammt und die anzuzeigende Information beinhaltet.

15. Verfahren nach Anspruch 12, **dadurch gekennzeichnet, dass** das Ereignis mit einer Verschiebung in Bezug auf den Berührungsanzeigebildschirm zusammenhängt.

16. Verfahren nach einem der Ansprüche 12 bis 15, **dadurch gekennzeichnet, dass** die Information in einer Wissensdatenbank, die von mehreren digitalen Verarbeitungseinrichtungen gemeinsam genutzt wird, mit deskriptiven Daten des Ereignisses gespeichert wird.

17. Verfahren nach einem der Ansprüche 12 bis 16, **dadurch gekennzeichnet, dass** die deskriptiven Daten des Ereignisses einen Zeitanzeiger des Eintretens des Ereignisses umfassen.

18. Verfahren nach einem der Ansprüche 16 oder 17, **dadurch gekennzeichnet, dass** die Information aus der Wissensdatenbank wiedergegeben wird.

19. Verfahren nach einem der Ansprüche 12 bis 18, **dadurch gekennzeichnet, dass** die Information in einem für das Schreiben zugewiesenen Bereich lokalisiert wird, welcher ein virtuelles entfernbares selbsthaftendes kleines Blatt Papier darstellt oder welcher ein großes Blatt Papier darstellt, das von einem Stapel virtueller Papierblätter lösbar ist.

20. Verfahren nach einem der Ansprüche 10 bis 19, **dadurch gekennzeichnet, dass** wenigstens einer der mehreren für das Schreiben zugewiesenen Bereiche ausgehend von einer Einrichtung zur Verarbeitung der Information erzeugt wird, welche allein berechtigt ist, jede Information zu ändern, die in dem erzeugten für das Schreiben zugewiesenen Bereich enthalten ist.

21. Computerprogramm, welches Programmcodeanweisungen zur Ausführung der Schritte des Verfahrens nach einem der Ansprüche 10 bis 20, wenn das Programm auf wenigstens einem Computer ausgeführt wird, umfasst.

## Claims

1. Communication system for reproducing an interactivity of physical type between at least two players, especially two participants in a meeting, comprising:
at least one display screen (20, 21, 22) having dimensions comparable to those of a white board and comprising a first device designed to detect at least one human finger position by measuring a first physical quantity which varies as a function of a human finger contact on said screen (20, 21, 22),
**characterized in that** it comprises:
- a plurality of objects (30, 31, 32) emitting a uniform signal at different frequencies distinguishing the objects from one another, said signal being a continuous train of ultrasounds at predetermined frequency,
- a second device designed to detect at least one position of an object (30, 31, 32) distinctively from that of a human finger, by measuring a second physical quantity linked with a reception of said uniform signal which varies as a function of the position of the object (30, 31, 32) with respect to the screen (20, 21, 22), and
- a computer (10, 11, 12) configured at least to receive the position of the human finger, detected by the first device, and the position of one object from the plurality of objects, detected by the second device;
and **in that** said computer is programmed at least to:
- allocate a zone of the screen (20, 21, 22) to writing;
- modify in said zone allocated to writing a local visual aspect which follows the position of the object (30, 31, 32) on the screen when said object emits said uniform signal, to generate a function of writing in a given colour or of deletion which depends on the frequency of the signal of the object whose position is detected;
- vary said zone allocated to writing as a function of a displacement linked with the position of the human finger on the screen (20, 21, 22).

2. System according to Claim 1, **characterized in that** said zone allocated to writing demarcates a small virtual removable self-adhesive sheet of paper.

3. System according to either of Claims 1 and 2, **characterized in that** said computer is programmed at least to:
- allocate at least one zone of the screen (20, 21, 22) to a command function in conjunction with an information display;
- execute said command function when said first device detects a human finger position or said second device detects a position of said object (30, 31, 32) **in that** zone of the screen (20, 21, 22) which is allocated to said command function.

4. System according to one of the preceding claims, **characterized in that** said object (30, 31, 32) is equipped in such a way as to emit said uniform signal when the object is in mechanical contact with said screen (20, 21, 22) .

5. System according to one of the preceding claims, **characterized in that** it comprises at least one white board which comprises said screen (21), a panoramic wall which comprises said screen (20), and/or a horizontal work table which comprises said screen (22), and **in that** said first device is respectively of capacitive type linked with said white board screen, of infrared detection type linked with said panoramic wall screen, of infrared, capacitive or resistive detection type linked with said horizontal table screen.

6. System according to one of the preceding claims, **characterized in that** it comprises at least one personal tablet which comprises said screen and **in that** said first device is of capacitive type and linked with said personal tablet.

7. System according to one of the preceding claims, **characterized in that** said computer (10, 11, 12, 13) is programmed to:
- generate on demand at least one copy of a small virtual removable self-adhesive sheet of paper on one of the white board, personal tablet, panoramic wall and/or horizontal work table screens;
- drag on demand said copy towards one of the other white board, personal tablet, panoramic wall and/or horizontal work table screens;
- modify on demand said copy on the basis of that of the screens on which it has been generated and/or on which it has slid.

8. System according to either of Claims 2 and 7, **characterized in that** said computer is programmed to:
- insert a multimedia element into said small sheet.

9. System according to one of the preceding claims, **characterized in that** said computer (10, 11, 12) is connected to a knowledge base (18) and **in that** it is programmed to:
- access a first content hosted by said knowledge base (18) as a function of actions of requests exerted by said human finger or by said object on said screen so as to display said first content on said screen;
- enrich said knowledge base (18) with a second content displayed on said screen as a function of expression actions exerted by said human finger or by said object on said screen which display said second content on said screen.

10. Communication method for reproducing an interactivity of physical type between at least two players, especially two participants in a meeting, comprising steps consisting in detecting at least one human finger position by measuring a first physical quantity which varies as a function of a human finger contact on a screen (20, 21, 22) of dimensions comparable to those of a white board, **characterized in that** it comprises steps consisting in:
- distinctively detecting, from the position of the human finger, at least one position of an object from among a plurality of objects (30, 31, 32) equipped so as to emit a uniform signal at different frequencies distinguishing the objects from one another, said signal being in the form of a continuous train of ultrasounds at predetermined frequency, by measuring a second physical quantity linked with a reception of said uniform signal which varies as a function of the position of the object (30, 31, 32) with respect to the screen (20, 21, 22),
- allocating a zone of the screen (20, 21, 22) to writing;
- receiving the detected position of said object;
- modifying in said zone allocated to writing a local visual aspect which follows the position of the object (30, 31, 32) on the screen when said object emits said uniform signal, to generate a function of writing in a given colour or of deletion which depends on the frequency of the signal of the object whose position is detected;
- receiving the detected position of the human finger;
- varying said zone allocated to writing as a function of a displacement linked with the position of the human finger on the screen (20, 21, 22).

11. Method according to Claim 10, **characterized in that** said zone allocated to writing demarcates a small virtual removable self-adhesive sheet of paper.

12. Method according to Claim 10 or 11, comprising steps consisting in:
- displaying (102) at least one information item by a first digital processing equipment item on a display touch screen, by executing (101) an instruction controlled by one of the players or participants; and
- storing (104) said information item by associating it with a contextual event related to said display touch screen, activated automatically by detection (103) of said event by said first digital processing equipment item.

13. Method according to Claim 12, **characterized in that** said event is linked to a withdrawal of contact of living or inert matter with said display touch screen.

14. Method according to Claim 12, **characterized in that** said event is linked to a reception, by said first digital processing equipment item which drives said display touch screen, of a message originating from a second digital processing equipment item and comprising said information item to be displayed.

15. Method according to Claim 12, **characterized in that** said event is linked to a displacement in relation to said display touch screen.

16. Method according to one of Claims 12 to 15, **characterized in that** said information item is stored in a knowledge base shared by a number of digital processing equipment items with descriptive data of said event.

17. Method according to one of Claims 12 to 16, **characterized in that** said descriptive data of said event comprise a time-of-appearance indicator of said event.

18. Method according to either of claims 16 and 17, **characterized in that** said information item is retrieved from said knowledge base.

19. Method according to one of Claims 12 to 18, **characterized in that** said information item is located in an area allocated for writing which demarcates a small virtual removable self-adhesive sheet of paper or which demarcates a large sheet of paper which can be detached from a stack of virtual sheets of paper.

20. Method according to one of Claims 10 to 19, **characterized in that** at least one of a number of areas allocated for writing is generated from an information processing equipment item which is the only one authorized to modify any information contained in said generated area allocated for writing.

21. Computer program comprising program code instructions for the execution of the steps of the method according to one of Claims 10 to 20 when said program is run on at least one computer.
